Europäisches Patentamt

European Patent Office

Office européen des brevets

(11) Publication number: **0 477 910 A2**

## EUROPEAN PATENT APPLICATION

(21) Application number: **91116354.1**

(22) Date of filing: **25.09.91**

(51) Int. Cl.⁵: **G06F 3/00**

(30) Priority: **28.09.90 JP 257370/90**

(43) Date of publication of application:
**01.04.92 Bulletin 92/14**

(84) Designated Contracting States:
**DE FR GB**

(71) Applicant: **EZEL INC.**
**2-22-2 Koishikawa**
**Bunkyo-ku Tokyo 112(JP)**

(72) Inventor: **Yamamoto, Makoto, c/o Ezel Inc.**
**2-22-2, Koishikawa Bunkyo-ku**
**Tokyo 112(JP)**

(74) Representative: **Patentanwälte Grünecker,**
**Kinkeldey, Stockmair & Partner**
**Maximilianstrasse 58**
**W-8000 München 22(DE)**

(54) **Image processing based computer input apparatus.**

(57) The computer input apparatus related to the present invention is characterized by that it gives command data to a computer through image processing of human body that is indicating.

Fig. 1

## FIELD OF THE INVENTION

The present invention relates to an apparatus for inputting command data into a computer by an image.

## BACKGROUND OF THE INVENTION

As a means of computer input apparatus, keyboards have been known for a long time and are widely prevailed also in our country. It is not so difficult for people who have already mastered how to use typewriters to use keyboards, but it is necessary for people who have never tried a typewriter before to practice only to memorize the position of the keys.

Hence, a means of input that points coordinates on an image is also conventionally used. For example, touch screens, light-pens and mouses have been known.

## SUMMARY OF THE INVENTION

It is impossible to input by touch screen when there is no moisture on a surface of finger, and light-pen has some problems whose input coordinates are not precise. Also a mouse is limited for its durability because it is constructed of a control ball. Moreover, a touch screen, a light-pen and a mouse need signal lines and have subject to be solved for their durability and operations.

At the laboratory level, an experiment for such as coordinate input by an infrared ray projector has been made but there is some problems such as limitation of lighting condition, and has not reached to the practical level yet.

The purpose of present invention is to provide an input apparatus, whose structure is simple, whose operation is easy, which has also enough durability, and which is possible to input various command data.

## BRIEF DESCRIPTION OF THE DRAWINGS

Fig. 1 shows a diagram of an input apparatus related to the embodiment of the present invention;

Fig. 2 shows a flowchart of routine in which a command data by a human body is inputted;

Fig. 3 (a) shows a diagram of an image of the indicator before indicating instructions and the density projection x and y directions at this moment;

Fig. 3 (b) shows a diagram of image of the indicator after indicating instructions and the density projection in x and y directions at this moment;

Fig. 4 shows a flowchart of routine in which a command data by a character or number is inputted;

Fig. 5 shows a plan of a sheet in which characters and numbers are printed;

Fig. 6 shows a diagram of a Fere's coordinates of fingertip;

Fig. 7 shows a flowchart of routine in which the number is inputted according to the number of extended fingers;

Fig. 8 (a) shows an image diagram of hand in the shape of fist;

Fig. 8 (b) shows a diagram of Fig. 8 (a) that describes the area of which has not changed;

Fig. 8 (c) shows a diagram when the total number of concavities, the depth of which is equal to a certain depth d or larger than that, is more than 1;

Fig. 8 (d) shows a diagram when the total number of concavities, the depth of which is equal to a certain depth d or larger than that, is more than 1;

Fig. 9 shows a diagram describing a case that the number is recognized according to concavities.

## PREFERRED EMBODIMENT OF THE PRESENT INVENTION

Hereinafter, the present invention is described with an embodiment referring to the attached drawings.

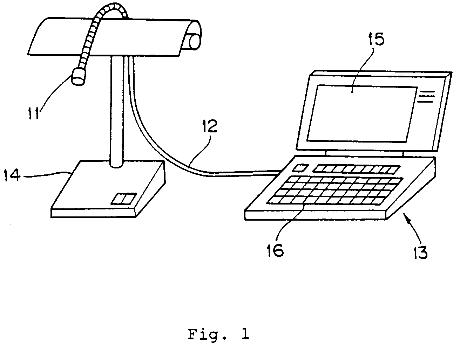

Fig. 1 shows an input apparatus relating to the embodiment of the present invention. Video camera 11 is connected with computer 13 through cable 12 and fixed to fluorescent lamp 14. Computer 13 is a portable computer which has been widely known and possess, for example, liquid crystal display 15 and keyboard 16. In the present embodiment, various command data such as the beginning and end of processing to computer 13 are inputted from keyboard 16. Command data, as described later, is given based on such as a gesture of human body or a posture, and computer 13 performs image processing and recognize the command data. It means a computer 13 is equipped with a board that performs image processing (Hereinafter, it is called image processing device). Although fluorescent lamp 14 is conventionally known, other lighting units can be used instead of that.

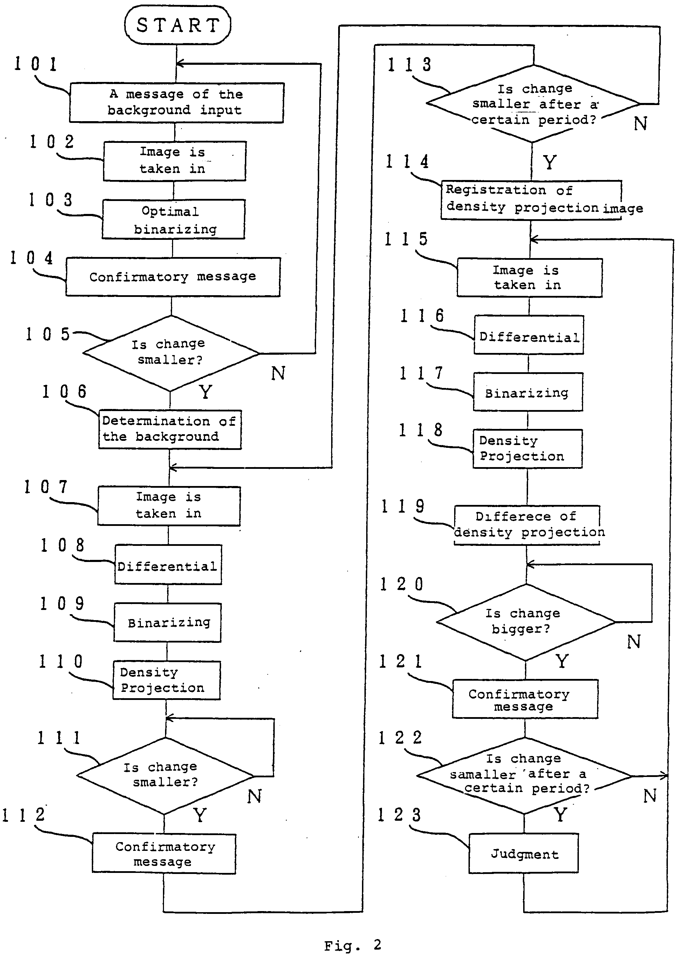

Fig. 2 shows a routine in which command data are given to computer 13 by raising a hand that is a part of human body. It is preferable to posses a light for lighting an indicator, other than fluorescent lamp 14 shown in Fig. 1, and also video camera 11 needs to be fixed on such as a tripod.

First, steps from 101 through 106 will be explained. Here shows a step in which image processing for only the background is performed. When a command data in order to begin processing is inputted by keyboard 16, in step 101, a message for the background input will be displayed on display 15 of the computer. In step 102, an image is taken in, and in step 103, binarizing by the optimal threshold is performed by the image processing device. In step 104, a confirmatory message is displayed on display 15 that indicates optimal binarizing has been performed. When the indicator judges that the background should not be determined, some change by projecting hand to a camera and so on will be given to the image. In step 105, when it is judged that the amount of image change is bigger than a predetermined value, the background image is not determined and the processing steps from 101 through 104 will be repeated. Contrary to this, when the indicator judges the background should be determined, no change is given to the image. As a result of this, in step 105, it is judged the amount of image changes is smaller than a predetermined value, and in step 106, the background image is determined.

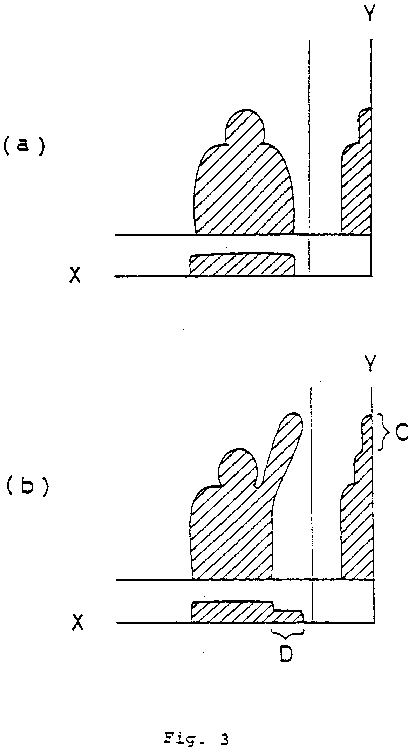

Next, steps from 107 through 114 will be explained. Here, a step is described in which the image of person before indicating instructions is taken in the background determined in step 106 and image processing for that is performed. In step 107, the image of the indicator is taken in, through a camera, and in step 108, differential processing is performed in order to clear the outline of the person. In step 109, binarizing of the image is performed, and after that, in step 110, a density projection is performed in x and y directions. Fig. 3 (a) shows the image of person before indicating instructions and the density projection in x and y directions at that time. In step 111, when the amount of change in density projection is bigger than a predetermined value, it means the indicator is moving, and the processing in step 111 will be repeated. When the indicator is not moving and the amount of change in the density projection is smaller than a predetermined value, in step 112, a confirmatory message is displayed that indicates that the indicator is moving. In step 113, when the indicator judges that the image, which indicates nothing should not be taken in, the indicator moves his body. In this case, after a certain period passes and it is judged the amount of density projection is bigger than a predetermined value, the processing from step 107 through step 112 will be repeated. On the other hand, in step 113, when the indicator judges that the density projection of the image which has not indicated should be taken in, the indicator keeps the same posture as it is. In that case, after a certain period passes, the amount of change in the density projection will become smaller than a predetermined value, and in step 114, density projection image will be registered.

Next, steps from 115 through 118 will be explained. Here, a step is described in which image processing is performed for the person who indicated. In step 115, the image of a person with his raised hand is taken. Next, in step 116, differential processing is performed for the image, and in step 117, the image is binarized. In step 118, a density projection is performed for the image, with the raised hand, in x and y directions. In Fig. 3 (b) shows the image of the person with the raised hand and the density projection in x and y directions at that time.

Next, steps from 119 through 123 will be explained. Here, a step is described in which it is judged whether or not an indication by the indicator was given. In step 119, the difference of projected density is calculated between the density projection images registered in step 114 and 118. The density projection in Fig. 3 (b) changes as shown in sign C and D, compared with that of Fig. 3 (a). When the amount of change is not bigger than a predetermined value, step 120 will be repeated. In step 120, when it is judged the amount of change is bigger than a predetermined value, in step 121, a confirmatory message of that is displayed on display 15. In step 122, after a certain period passes and it is judged that the amount of the difference between the density projections is bigger than a predetermined value, it is lead to the judgment that there was an indication by the indicator, and the processing steps from 115 will be repeated. Contrary to this, in step 122, when the amount of change is smaller than a predetermined value, it is lead to the judgment that there was no indication given by the indicator, and this result is judged in step 123, and the processing from step 115 will be repeated.

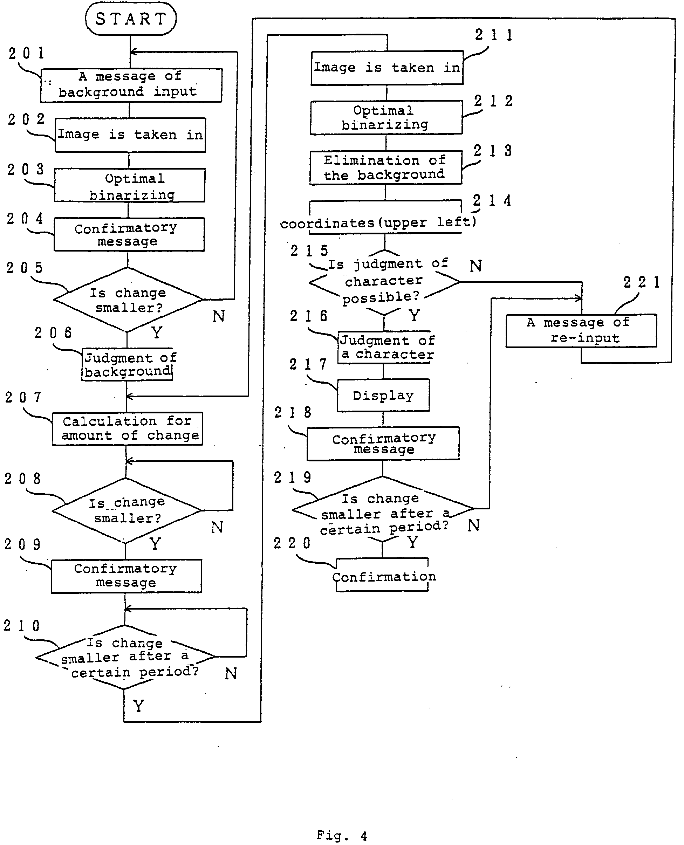

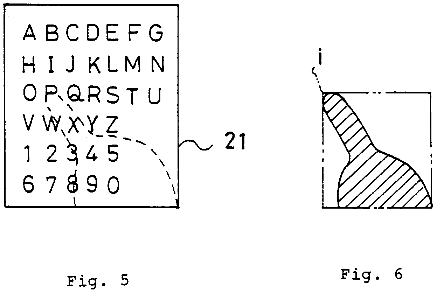

In Fig. 4, a routine is shown for inputting characters or numbers into computer 13, and by this, a command is given to computer 13. In this embodiment, as shown in Fig. 5, sheet 21 in which characters and numbers are printed is used, and a command data is to be inputted into computer 13 by pointing a character or a number in the sheet 21 by the indicator.

First, steps from 201 through 206 is explained. Here, only sheet 21 shows a step of image processing. When a command data is inputted by keyboard 16 in order to begin the processing, in step 201, a message for the background input is displayed on display 15, and in step 202, the image of only sheet 21 is taken in. In step 203, the image of only sheet 21 is binaraized by the optimal threshold, in step 204, a confirmatory message of that is displayed on. In step 205, when the indicator judges the confirmation should not be made for the background of only sheet 21, the indicator gives some change to the image by waving his hand and so on. Contrary to this, when determination should be limited to the background of only sheet 21, the indicator do not give any changes to the image, and as a result of this, the background is limited to only for sheet 21.

Next, steps from 207 through 210 will be explained. Here, a step is described in which it is judged whether or not the finger on sheet 21 is moving. In step 207, when the finger appears on sheet 21, a change will be made in the numbers of pixels, and the amount of change is calculated. In step 208, when the amount of change is bigger than a predetermined value, it means the finger has not stopped moving on sheet 21 yet, and step 208 will be repeated. In step 208, when it is judged the amount of change in the number of pixels is smaller than a predetermined value, in step 209, a confirmatory message of that is displayed. In step 210, after a certain period passes and the amount of change in the pixels is bigger than a predetermined value, it is not judged that there was an indication by the finger, and processing in step 210 will be repeated. In step 210, after a certain period passes and the amount of change in the number of pixels is smaller that a predetermined value, it is judged there was an indication by the finger.

Next, steps from 211 through 214 will be explained. Here, a step is described in which Fere's coordinates of fingertip (upper left) put on sheet 21 is calculated. In step 211, an image of the finger on sheet 21 which is not moving is taken in through camera 11. In step 212, the image is digitized to the most appropriate value. In step 213, the background is eliminated, and as the result of this, the image of only the finger is obtained. In step 214, Fere's coordinates of a dot (i) pointed by the fingertip is calculated. Fig. 6 shows Fere's coordinates of the dot (i) pointed by the fingertip.

Next, steps from 215 through 221 will be explained. Here, a step is described in which it is judged whether or not a command by character or number on sheet 21 pointed by finger is inputted. In step 215, it is determined which character or number in sheet 21 coordinates (i) is indicating, by applying fingertip coordinates (i) calculated in step 214 to sheet 21. When pointing by the indicator is not proper, it is impossible to determine the character, and in this case, a message of re-input will be displayed on display 15, and the processing steps from 207 through 214 will be repeated. In step 215, when it is judged that it is possible to determine the character, the character is determined in step 216, and in step 217, the character is displayed on display 15. Also, in step 218, a confirmatory message of that is displayed on display 15. In step 219, when the indicator judged the character is not what he intends, a change is given to the image by moving his hand. When the amount of image change becomes bigger than a predetermined value as the result of this, the character is not determined, and in step 221, a message of reinput is displayed, and processing from step 207 will be repeated. In step 219, when the indicator judges the character is what he intends, the indicator does not move his hand. As the result of this, the amount of image change becomes smaller than a predetermined value, and in step 220, the characters is determined and inputted. The determined character is temporally stored in a baffa, and after a certain number of characters are planted, they will be transferred to RAM.

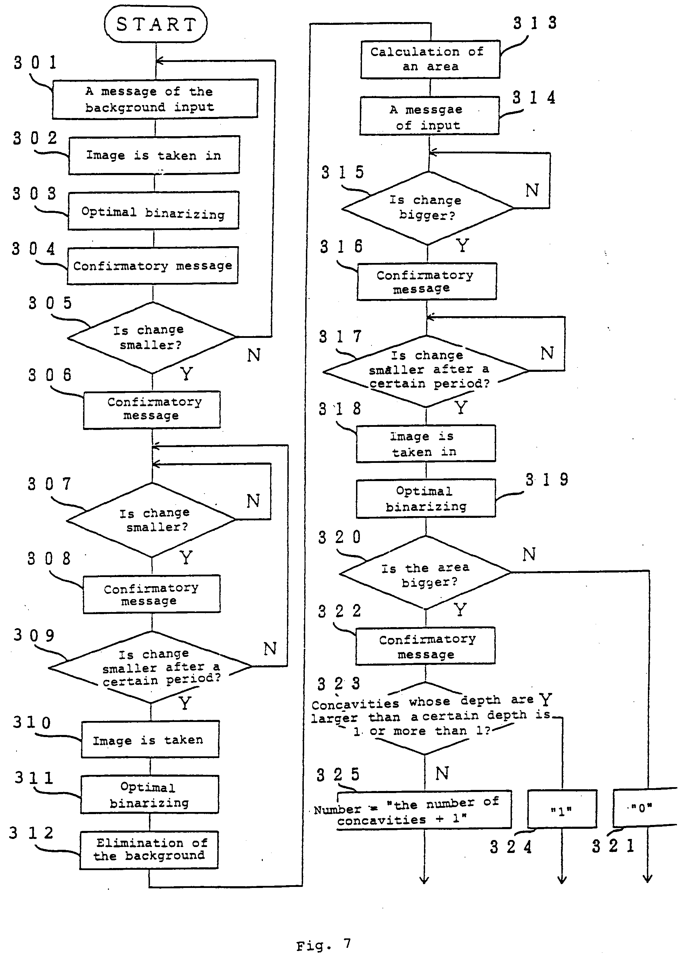

In Fig. 7, a routine is described in which the number is inputted into computer 13 according to the number of extended fingers. First, steps from 301 through 306 will be explained. Here, a step, in which only the background is inputted, is described. When a command data in order to begin the processing is inputted from keyboard 16, in step 301, a message of the background input is displayed on display 15, and in step 302, only the image of the background is taken in. In step 303, digitizing to the most appropriate value for the image is performed, and in step 304, a confirmatory message of the digitizing is displayed. In step 305, when the indicator judges the background should not be determined, the indicator gives some changes to the image by projecting his hand to the camera 11 and so on. When the amount of image change becomes bigger than a predetermined value as the result of this, the background is not determined, and the processing steps from 301 through 304 will be repeated. When the indicator judges the background should be determined, the indicator does not give any changes to the image. In this case, in step 305, the amount of image change becomes smaller than a predetermined value, and in step 306, the background is determined.

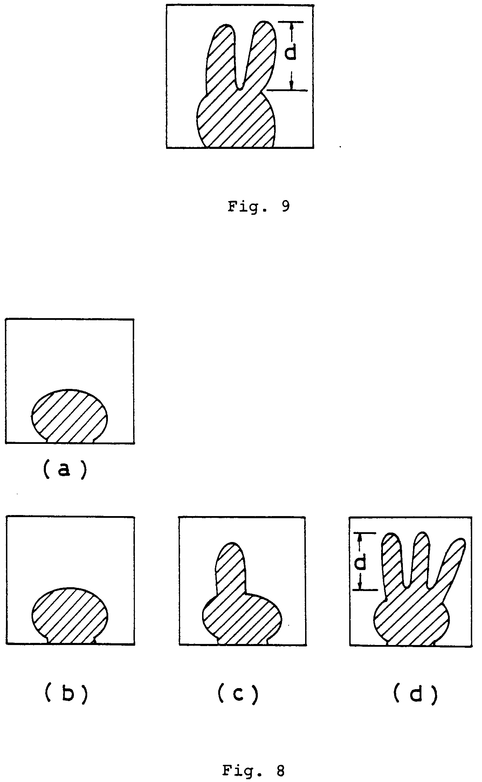

Next, steps from 307 through 314 will be explained. Here, a step is described , in which an image of a hand whose fingers have not extended through the camera i.e. an image of a fist is taken in, and an area of the fist is calculated. In step 307, it is judged whether or not the fist is moving, and when the amount of the image change is bigger than a predetermined value, the processing in step 307 will be continued until the hand stops moving. In step 307, when it is judges the amount of image change is smaller than a predetermined value, in step 308, a confirmatory message of that is displayed on display 15. In step 309, when the indicator judges the still image is not of the shape of the fist, the indicator gives some changes to the image by moving his hand and so on. When the amount of image change is bigger than a predetermined value after a certain period passes, the processing steps from 307 through 309 will be repeated. In step 309, when the indicator judges the image of the fist should be taken in, the indicator stops moving his hand. As the result of this, the amount of image change becomes smaller than a predetermined value after a certain period passes, and in step 310, an image of the fist as shown in Fig. 8 (a) will be taken in. In step 311, the image is binaraized by the optimal threshold. In step 312, the background is eliminated, and in step 313, an area of the fist is calculated and registered.

Next, steps from 314 through 323 will be explained. Here, a step is described in which a number from 0 to 5 is inputted according to the number of finger. In step 314, an input message is displayed. In step 315, a hand extending fingers will be projected to a camera, whose number is the same as that the indicator wants to input. At this time, by the hand crossing the image or the change in the position of the hand , a change will be made in the image. Until the change is made, the processing in step 315 is repeated. In step 316, a confirmatory message of the inputted number is displayed. In step 317, when the intended image by the indicator is displayed, the indicator stops moving his hand. When the amount of image change is bigger than a predetermined value after a certain period passes, it is judged that the hand is moving, and the image is not taken in, and the processing in step 317 will be repeated. In step 317, when it is judged the amount of image change becomes smaller than a predetermined value by that the indicator stops moving his hand, in step 318, the image of hand is taken in. In step 319, the taken image will be binaraized by the optimal threshold. In step 320, an area of the hand extending the finger is compared with an area of the fist in step 313. When there is no change in the amount of the area (Fig. 8 (b)), it is in the shape of the fist and the number means "0", and in step 321, "0" is inputted. In step 320, when the amount of area is bigger than that of step 313, it means the number is "1" and more than "1", and in step 322, a message of that is displayed on display 15. In step 323, as shown in Fig. 9, when the total number of concavities, the depth of which is larger than a certain depth d, is less than 1 (Fig. 8 (c)), the number 1 is inputted. Contrary to this, when it is judged the total number of concavities is 1 or more than 1, in step 325, the number calculated by a formula " the number of concavities + 1" will be inputted (Fig. 8 (d)).

As mentioned above, according to the present invention, it is possible to give a command to a computer by a posture or movement of human body, without using a conventional keyboard, touch screen, light-pen and mouse. Therefore, it take effect that input manner will be simple, and moreover, the durability of inputted apparatus is not be a matter of considered.

**Claims**

1. A computer input apparatus comprising an input means for photographing an image of a person who is indicating an instruction by his own body, an image processing means for extracting and outputting characteristics from said image and a converting means for converting said characteristics into a data corresponding to said characteristics.

2. A computer input apparatus characterized in that said characteristics comprises Fere's coordinates.

3. A computer input apparatus characterized in that said characteristics comprises data of density projection.

4. A computer input apparatus characterized in that said characteristics comprises number of concavities.

Fig. 1

Fig. 2

Fig. 3

Fig. 4

Fig. 5

Fig. 6

Fig. 7

Fig. 9

( a )

( b )

( c )

( d )

Fig. 8